(19) Europäisches Patentamt

European Patent Office

Office européen des brevets

(11) Veröffentlichungsnummer: **0 294 800 B1**

(12) **EUROPÄISCHE PATENTSCHRIFT**

(45) Veröffentlichungstag der Patentschrift: **29.01.92**

(21) Anmeldenummer: **88109180.5**

(22) Anmeldetag: **09.06.88**

(51) Int. Cl.⁵: **F15B 13/043**, F15B 11/02

(54) **Hydraulisch gesteuertes Ventil.**

(30) Priorität: **12.06.87 US 60880**

(43) Veröffentlichungstag der Anmeldung:
**14.12.88 Patentblatt 88/50**

(45) Bekanntmachung des Hinweises auf die
Patenterteilung:
**29.01.92 Patentblatt 92/05**

(84) Benannte Vertragsstaaten:
**DE FR GB IT SE**

(56) Entgegenhaltungen:
**CH-A- 459 770**
**FR-A- 1 440 115**
**US-A- 3 384 102**
**US-A- 3 613 717**
**US-A- 4 362 088**

(73) Patentinhaber: **DEERE & COMPANY**
**1 John Deere Road**
**Moline, Illinois 61265(US)**

(72) Erfinder: **Stoss, Kenneth Joseph**
**3111 Hillcrest Drive**
**Cedar Falls Iowa 50613(US)**
Erfinder: **Felland, Richard Allen**
**835 Rose Lane**
**WaterLoo Iowa 50702(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

## Beschreibung

Die Erfindung betrifft ein hydraulisch gesteuertes Ventil mit einem in einem Gehäuse bewegbaren Hauptsteuerschieber zur Steuerung der Flüssigkeitsverbindung zwischen einem Speiseanschluß, welcher die Hauptventilbohrung mit einer Druckquelle verbindet, einem Rücklaufanschluß, welcher die Hauptventilbohrung mit einem Sammelbehälter verbindet, und einem Arbeitsanschluß, welcher die Hauptventilbohrung mit einer hydraulischen Last verbindet, ferner mit einem beweglichen Vorsteuerventilteil, durch welches ein Vorsteuerdruck zur Beeinflussung zur Stellung des Hauptsteuerschiebers einstellbar ist, und mit Lastrückkopplungsmitteln, die in Abhängigkeit vom Flüssigkeitsdruck im Arbeitsanschluß eine Beeinflussung des Vorsteuerventilteils in der Weise ermöglichen, daß Schwankungen der Flüssigkeitsviskosität und des Speisedruckes ausgeglichen werden.

Ein derartiges vorgesteuertes Ventil ist beispielsweise aus der US-A-3 384 102 bekannt.

Bedingt durch verbesserte Kostenentwicklung und Leistung nimmt der Einsatz elektrohydraulisch gesteuerter Ventile stetig zu. Eine Anwendung für solche Ventile ist bei der elektrohydraulischen Steuerung von Fahrzeuggetrieben gegeben. Hierbei ist es erforderlich, daß das Ventil die Fähigkeit hat, auf Abruf den vollen Systemdruck zu liefern. Andererseits ist es wünschenswert, wenn das Ventil auch über Stabilität verfügt, wenn es weniger als den vollen Pumpendruck an die Last weitergibt. Schwankungen in der Ölviskosität bzw. im Speisedruck sollten ausgeglichen werden. Ein elektrohydraulisch gesteuertes Ventil sollte derart ausgelegt sein, daß der Arbeitsanschluß mit einem Ölsammelbehälter dann verbunden ist, wenn durch die Magnetspule kein elektrischer Strom fließt.

Aufgabe der Erfindung ist es, ein hydraulisch gesteuertes Ventil mit Lastdruckrückkopplung der eingangs genannten Art bereitzustellen, welches bei voller Öffnung den vollen Systemdruck an die Last weitergibt.

Diese Aufgabe wird erfindungsgemäß dadurch gelöst, daß Steuerungsmittel vorgesehen sind, die die Lastrückkopplungsmittel dann außer Funktion setzen, wenn das Vorsteuerventilteil sich in einer Lage befindet, in der es den Hauptsteuerschieber veranlaßt, den Druck am Arbeitsanschluß zu maximieren.

Vorzugsweise werden die Steuermittel so ausgelegt, daß sie bei einer festlegbaren und einstellbaren Vorschubstellung des Vorsteuerventilteils wirksam werden.

In vorteilhafter Weise ist ein Lastrückkopplungsmittel als Lastrückkopplungskanal ausgebildet, der das druckabhängige Vorsteuerventilteil mit dem Flüssigkeitsdruck des Arbeitsanschlusses beaufschlagt. Als Steuermittel sind dabei Ventilmittel zum Steuern des Flüssigkeitsstromes durch den Lastrückkopplungskanal vorgesehen. Diese Ventilmittel sind geeignet, den Lastrückkopplungskanal zu öffnen und zu schließen. Infolge einer Bewegung des Vorsteuerventilteils, die dieses ausführt, um den Druckabfall zwischen Pumpen- und Arbeitsanschluß auf ein Minimum zu reduzieren, wird der Lastrückkopplungskanal verschlossen und damit eine Lastdruckrückkopplung unterbunden. Dies geschieht dann, wenn das Vorsteuerventilteil und der Hauptsteuerschieber den Durchgang zwischen Pumpen- und Arbeitsanschluß ganz öffnen. Der geschlossene Lastrückkopplungskanal verringert auch Leckverluste, da sein Rückflußweg geschlossen ist und der Hauptsteuerschieber die Lastseite von der Rückflußseite abriegelt.

Eine vorteilhafte Weiterbildung der Erfindung sieht vor, daß ein Teil des Lastrückkopplungskanals durch einen Teil des Vorsteuerventilteils hindurchführt.

Vorzugsweise wird im Gehäuse zwischen Gehäusebohrung und Hauptsteuerschieber eine Vorsteuerkammer gebildet, wobei der Hauptsteuerschieber in Abhängigkeit des Flüssigkeitsdruckes in der Vorsteuerkammer bewegt wird. Ferner befindet sich im Gehäuse im Bereich eines Endes des Vorsteuerventilteils eine Rückkopplungskammer, welche über den Lastrückkopplungskanal mit dem Flüssigkeitsdruck des Arbeitsanschlusses in Verbindung steht. Solange der Lastrückkopplungskanal nicht durch die oben genannten Steuerungsmittel verschlossen ist, wird das Vorsteuerventilteil in Abhängigkeit des Arbeitsdruckes gesteuert. Die hierdurch verursachte Lastdruckrückkopplung führt zu einer Stabilisierung des Arbeitsdruckes, solange der Lastdruckrückkopplungskanal geöffnet ist.

Um einen unkontrollierten Druckanstieg in der Rückkopplungskammer zu vermeiden, ist es zweckmäßig, einen Entlastungsrückkopplungskanal vorzusehen, der den Rücklaufanschluß mit der Rückkopplungskammer verbindet. Wenigstens ein Teil dieses Entlastungsrückkopplungskanals führt zweckmäßigerweise durch einen Teil des Vorsteuerventilteils.

Eine vorteilhafte Ausgestaltung der Erfindung sieht vor, daß ein eine Gehäusebohrung zur Aufnahme eines Vorsteuerventilschiebers enthaltendes Vorsteuerventilgehäuse vorgesehen ist. Dieses Vorsteuerventilgehäuse enthält wenigstens eine erste Öffnung, die mit der Gehäusebohrung in Verbindung steht und mit dieser einen Abschnitt des Lastrückkopplungskanals bildet. Ferner enthält das Vorsteuerventilgehäuse wenigstens eine zweite Öffnung, die ebenfalls mit der Gehäusebohrung in Verbindung steht und mit dieser einen Abschnitt des Entlastungsrückkopplungskanals bildet. Der Vorsteuerventilschieber ist verschiebbar in der Gehäusebohrung angeordnet und weist eine axiale Bohrung auf, welche mit einem Ende mit der Rückkopplungskammer in Verbindung steht. Der Vorsteuerventilschieber weist wenigstens einen ersten radialen und einen zweiten radialen Durchgangskanal auf, die die axiale Bohrung kreuzen. Der erste radiale Durchgangskanal bildet mit der axialen Bohrung einen Abschnitt des Lastrückkopplungskanals. Der zweite radiale Durchgangskanal bildet mit der axialen Bohrung einen Abschnitt des Entlastungsrückkopplungskanals. Zwischen dem ersten und dem zweiten Durchgangskanal befindet sich ein Abschnitt mit vergrößertem Durchmesser, welche mit der Innenwandung der Gehäusebohrung derart zusammenwirkt, daß sich beim Verschieben des Vorsteuerventilschiebers die Verbindung zwischen der ersten Öffnung des Vorsteuerventilgehäuses und dem ersten Durchgangskanal des Vorsteuerventilschiebers öffnen und verschließen läßt.

Dies bedeutet, daß durch Verschiebung des Vorsteuerventilschiebers die Lastdruckrückkopplung unterbunden werden kann. Der Hauptsteuerschieber wird vollständig geöffnet. Damit liegt der Arbeitsanschluß unmittelbar am Speiseanschluß.

Vorzugsweise weist die axiale Bohrung im Vorsteuerventilteil einen Abschnitt mit vermindertem Querschnitt auf. Dieser verminderte Querschnitt liegt zwischen dem ersten und zweiten radialen Durchgangskanal. Damit wird der Durchfluß in dem Entlastungsrückkopplungskanal gedrosselt. Solange über den Lastrückkopplungskanal die Verbindung zwischen dem Arbeitsanschluß und der Rückkopplungskammer offen ist, findet zwischen beiden ein Druckausgleich statt. Wenn der Lastrückkopplungskanal jedoch durch die Bewegung des Vorsteuerventilteils verschlossen wird, kann der Druck in dem Rückkopplungskanal nicht mehr aufrecht erhalten werden, da er über den Entlastungsrückkopplungskanal abgebaut wird. Die Geschwindigkeit des Druckabbaues hängt von der Drosselung an der Stelle des verminderten Querschnittes im Entlastungsrückkopplungskanal ab.

Eine weitere vorteilhafte Ausgestaltung der Erfindung sieht einen Vorsteuerversorgungskanal, der den Speiseanschluß mit der Vorsteuerkammer verbindet, und einen Vorsteuerentlastungskanal, der den Rücklaufanschluß mit der Vorsteuerkammer verbindet, vor. Die Durchflummenge des Vorsteuerentlastungskanals wird dabei durch die Stellung des Vorsteuerventilschiebers derart beeinflußt, daß mit steigendem Druck in der Rückkopplungskammer der Vorsteuerentlastungskanal geschlossen wird.

Vorzugsweise sind die Rückkopplungsventilmittel derart ausgelegt, daß sie den Lastrückkopplungskanal bei wenigstens einer vorbestimmbaren Vorschubstellung des Vorsteuerventilteils verschließen. Das Verschließen erfolgt dann, wenn das Vorsteuerventilteil in eine Richtung verschoben wird, die zu einem Öffnen der Verbindung zwischen Vorsteuerkammer und Vorsteuerentlastungskanal führt. Vorzugsweise führt wenigstens ein Teil des Vorsteuerversorgungskanals durch einen Teil des Vorsteuerventilteils. Ferner führt vorzugsweise wenigstens ein Teil des Vorsteuerversorgungskanals durch einen Teil des Vorsteuerventilgehäuses.

Der Grundgedanke der vorliegenden Erfindung, die Lastdruckrückkopplung unter bestimmten Bedingungen zu unterbrechen, kann vorteilhaft auch bei einem Ventil Anwendung finden, bei dem die Vorsteuerstufe digital gesteuert wird und zwar mit einer Auf-Zu-Charakteristik. Als Steuersignal dient das Signal eines Drucksensors, der im Bereich des Arbeitsanschlusses angeordnet ist und den Lastdruck elektrisch mißt. Eine Proportionalsteuerung der Vorsteuerstufe wird unterbrochen, sobald ein maximaler Arbeitsdruck angefordert wird.

Anhand der Zeichnung, die ein Ausführungsbeispiel der Erfindung beschreibt, werden weitere vorteilhafte Ausgestaltungen und Weiterbildungen der Erfindung erläutert.

Es zeigt:

| | |
|---|---|
| Figur 1 | die Teilschnittansicht eines erfindungsgemäßen elektrohydraulischen Ventils, |
| Figur 2 | die Teilschnittansicht einer Ventilhülse, |
| Figur 3 | eine Ansicht des Hauptventilsteuerschiebers |
| Figur 4 | die Schnittansicht des Vorsteuerventilgehäuses, |
| Figur 5 | die Endansicht des Vorsteuerventilgehäuses, |
| Figur 6 | eine Ansicht des Vorsteuerventilschiebers, |
| Figur 7 und 8 | eine Seiten- bzw. Endansicht des Magnetankers. |

Das Ventil 10 hat ein Gehäuse oder einen Druckverteiler 12 mit einer sich darin erstreckenden Bohrung 14. Die Bohrung 14 steht durch einen Vorsteueranschluß 16, durch den Vorsteuerdruckmittel zugeführt wird, und einen Speiseanschluß 18, durch den Speisedruckmittel zugeführt wird, mit einer Hydraulikdruckmittelquelle in Verbindung. Der Vorsteueranschluß 16 und der Speiseanschluß 18 können mit der selben Druckmittelquelle verbunden werden. Einige Anwendungen verlangen jedoch, daß der Vorsteueranschluß und der Speiseanschluß getrennt bleiben. Die Bohrung 14 ist über einen Sumpf- oder Rücklaufanschluß 20 mit einem Vorratsbehälter und über einen Arbeitsanschluß 24 mit einem Druck- oder Flüssigkeitsmotor 22 verbunden.

In ein Ende der Ventilbohrung 14 ist ein hohles Magnetankergehäuse 26 eingeschraubt, das eine Tauchankeranordnung 28 trägt. Die Tauchankeranordnung 28 umfaßt eine Ankergehäusekappe 30, eine Magnetankerhülse 32, eine Magnetspule 34 und eine Abdeckung 36, welche von einer Scheibe 38 und Mutter 40 festgehalten wird.

Das Gehäuse 12 und das Magnetankergehäuse 26 nehmen eine hohle Ventilhülse 42 mit einer Ventilbohrung 44 auf. Die Ventilhülse 42 ist mittels eines Gewindeflansches 43 am Magnetankergehäuse 26 befestigt. Ein radialer Kanal 46 verbindet die Ventilbohrung 44 mit dem Speiseanschluß 18. Ein radialer Kanal 48 verbindet die Ventilbohrung 44 mit dem Arbeitsanschluß 24. Ein radialer Kanal 50 verbindet die Ventilbohrung 44 mit dem Rücklaufanschluß 20.

Ein hydraulischer Rückkopplungskanal 52 erstreckt sich vorwiegend axial durch die Wandung der Ventilhülse 42 und verbindet den Arbeitsanschluß 24 mit dem Ende der Ventilhülse 42, das sich gegenüber dem Vorsteueranschluß 16 befindet. Vorzugsweise enthält der Rückkopplungskanal 52 eine mit Filter versehene Blende 54. Ein ringförmiger, zylindrischer Zwischenraum 56 trennt einen Teil der Ventilhülse 42 von dem Magnetankergehäuse 26. Eine Anflächung 57 an einer Seite (oder alternativ an beiden Seiten) des Gewindeflansches 43 stellt eine Verbindung zwischen dem Zwischenraum 56 und dem Rücklaufanschluß 20 her.

Axial beabstandete, radial verlaufende Öffnungen 58, 60, 62 verbinden die Ventilbohrung 44 mit dem ringförmigen Zwischenraum 56. Sie dienen dazu, die innere Beeinflussung des Ventils infolge von Schwankungen des Rücklaufdruckes auf ein Minimum zu begrenzen.

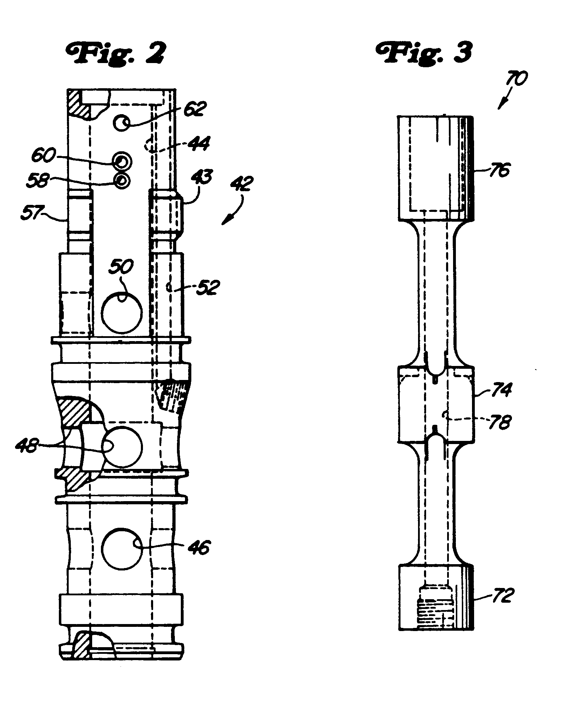

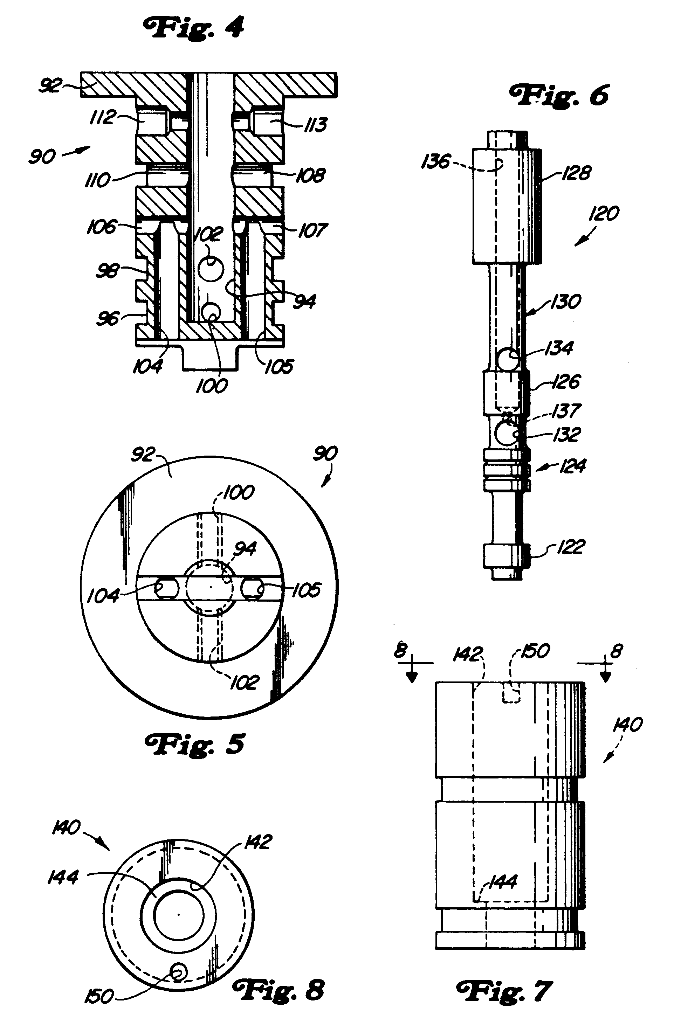

Die Ventilhülse 42 nimmt einen verschiebbaren, abdichtenden hohlen Hauptsteuerschieber 70 auf, welcher durch Nuten getrennte hervorstehende Stege 72, 74, 76 aufweist. Ein Vorsteuerversorgungskanal 78 für das Steuermedium erstreckt sich längs durch den Steuerschieber 70 und verbindet den Vorsteueranschluß 16 mit einer Vorsteuerkammer 80, die an den Steg 76 angrenzt. Durch eine Bewegung des Stegs 74 wird die Verbindung zwischen dem Arbeitsanschluß 24 und dem Rücklaufanschluß 20 sowie zwischen dem Arbeitsanschluß 24 und dem Speiseanschluß 18 gesteuert. Vorzugsweise enthält der Vorsteuerversorgungskanal 78 eine Blende 82 mit Filter. Eine Vielzahl von Aussparungen auf dem Steg 74, die am besten aus Figur 3 ersichtlich sind, sorgen für eine gleichförmige Flüssigkeitssteuercharakteristik.

Die Ventilhülse 42 und das Magnetankergehäuse 26 nehmen ein hohles, zylindrisches Vorsteuerventilgehäuse 90 auf, welches an einem Ende einen Flansch 92 trägt, mittels dessen die Grenzflächen zu einem ringförmigen Vorsprung 91 am Magnetankergehäuse 26 und zu einer Stirnfläche der Ventilhülse 42 abgedichtet werden. Ein Sackloch 94 erstreckt sich axial vom Flansch 92 aus in das Vorsteuerventilgehäuse 90. Ein Paar ringförmiger Nuten 96, 98 stehen mit den radialen Öffnungen 58, 60 der Ventilhülse 42 in Verbindung. Ein Paar radialer Kanäle 100, 102 verbinden das Sackloch 94 mit den Nuten 96, 98. Die Vorsteuerkammer 80 steht über die axialen Kanäle 104, 105 und die entsprechenden radialen Kanäle 106, 107 mit dem Sackloch 94 in Verbindung. Das Sackloch 94 steht über einen radialen Kanal 108 und eine Ringnut 110 mit der radialen Öffnung 62 der Ventilhülse 42 in Verbindung. Das Sackloch 94 steht ferner über radiale Durchgänge 112, 113 mit dem Rückkopplungskanal 52 in Verbindung.

In der Vorsteuerkammer 80 ist zwischen Vorsteuerventilgehäuse 90 und Steuerschieber 70 eine Feder 114 angeordnet, welche den Steuerschieber 70 vom Vorsteuerventilgehäuse 90 wegdrückt und zwar zu einer Position, bei der der Arbeitsanschluß 24 mit dem Rücklaufanschluß 20 in Verbindung steht und bei der die Verbindung zwischen Arbeitsanschluß 24 und Speiseanschluß 18 verschlossen ist.

Ein Vorsteuerventilschieber 120 reicht in das Magnetankergehäuse 26 hinein und ist in dem Sackloch 94 des Vorsteuerventilgehäuses 90 verschiebbar angeordnet. Der Vorsteuerventilschieber 120 enthält einen hervorstehenden Steg 122, einen hervorstehenden Steg 124, der durch Ausgleichsringnuten unterbrochen ist, und hervorstehende Stege 126, 128, die durch einen Schaft 130 miteinander verbunden sind. Zwischen den Stegen 124 und 126 befindet sich im Schaft 130 ein radialer Durchgangskanal 132. Ein weiterer radialer Durchgangskanal 134 erstreckt sich im Schaft 130 zwischen den Stegen 126 und 128. Eine axiale Bohrung 136 erstreckt sich von den Durchgangskanälen 132 und 134 bis zu dem Ende des Schaftes 130, das sich nahe dem Abschnitt 128 befindet. Zwischen den radialen Durchgangskanälen 132, 134 ist in einem Abschnitt der Durchmesser der Bohrung 136 verringert, wodurch eine Durchflußbegrenzung oder eine Blende 137 gebildet wird.

Ein hohler, durchgängig zylindrischer Magnetanker 140 ist verschiebbar innerhalb der Tauchankermagnetanordnung 28 in einer Rückkopplungskammer 162 angeordnet. Eine stufenförmige Bohrung 142 erstreckt sich im Magnetanker 140 und bildet einen Absatz 144. Der Steg 128 des Vorsteuerventilschiebers 120 befindet sich in dem Teil der Bohrung 142 mit dem grösseren Durchmesser und steht mit dem Absatz 144 im Eingriff. Ein Gewindeloch 150 nimmt eine Abstandsschraube 152 auf. Der Magnetanker 140 weist zur Aufnahme von Teflon-Gleitringen (nicht abgebildet) zwei ringförmige Nuten auf. Die Gleitringe dienen dazu, die Armatur konzentrisch in der Spulenbohrung zu halten und dadurch magnetische Seitenbelastungen zu vermindern. Die Teflon-Ringe dienen auch dazu, die Gleitreibung zu vermindern, wenn sich der Magnetanker 140 in der Spulenbohrung bewegt.

Ein Einstellkolben 160 befindet sich in der Kappe 30. Einstellkolben 160, Kappe 30, Magnetankerhülse 32, Magnetankergehäuse 26, Vorsteuerventilgehäuse 90 und Vorsteuerventilschieber 120 wirken zusammen und schließen eine Rückkopplungskammer 162 ein. Der Magnetanker 140 befindet sich in dieser Rückkopplungskammer 162. Eine Auslösefeder 164 befindet sich ebenfalls innerhalb der Kammer 162, und zwar zwischen dem Einstellkolben 160 und dem Steg 128 des Vorsteuerventilschiebers 120, und wird teilweise von der Bohrung 142 des Magnetankers 140 aufgenommen.

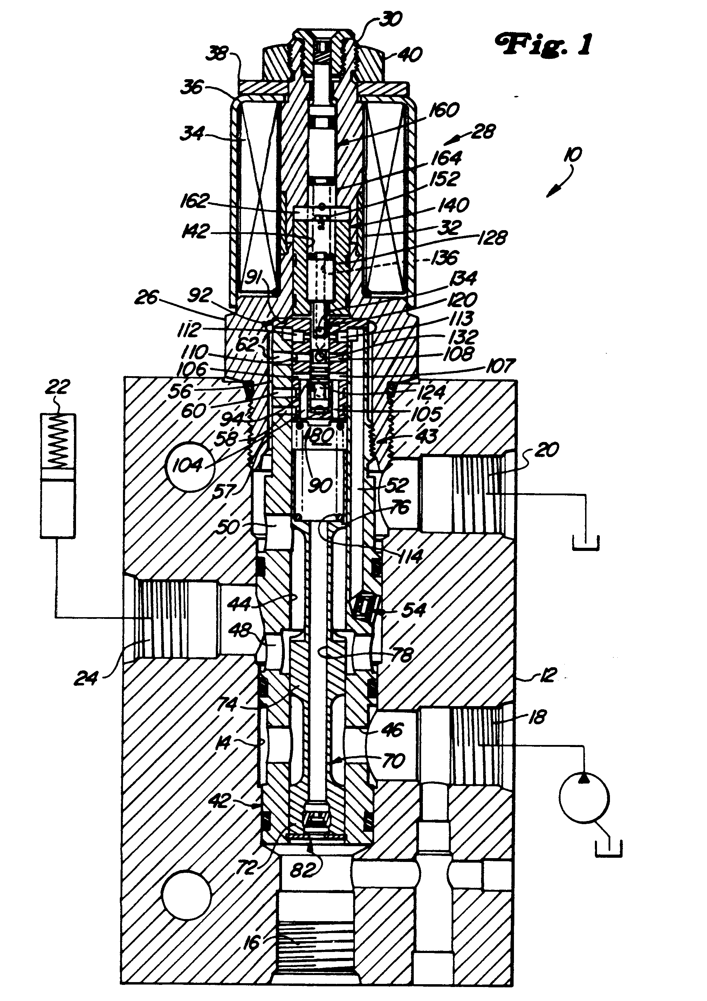

Die Wirkungsweise des erfindungsgemäßen hydraulisch gesteuerten Ventils ist folgende:
Wenn die Magnetspule 34 nicht unter Strom steht und das Ventil 10 sich in der in Figur 1 abgebildeten Position befindet, entspricht der Druck in der Vorsteuerkammer 80 dem Speisedruck am Vorsteueranschluß 16 bzw. am Speiseanschluß 18, sofern Vorsteuer- und Speiseanschluß miteinander verbunden sind. Dies ist so, weil der Vorsteueranschluß16 mit der Vorsteuerkammer 80 durch den Vorsteuerversorgungskanal 78, in dem sich eine Blende 82 befindet, verbunden ist.

In diesem nicht eingeschalteten Zustand steht auch der Arbeitsanschluß 24 mit der Rückkopplungskammer 162 in Verbindung. Die Verbindung verläuft über die mit Filter versehene Blende 54, den Rückkopplungskanal 52, die radialen Öffnungen 112, 113, den radialen Durchgangskanal 134 und die axialen Bohrungen 136, 142. Die gesamte Verbindung kann als Lastrückkopplungskanal bezeichnet werden.

Wenn die Spule 34 unter Strom steht, verschiebt sich entsprechend der Strombelastung der Magnetanker 140 und der Vorsteuerventilschieber 120 nach oben (Figur 1), also vom Hauptsteuerschieber 70 weg. Wenn sich dabei der Steg 124 des Vorsteuerventilschiebers 120 an der Kante der radialen Kanäle 106, 107 vorbei bewegt, wird eine Verbindung zwischen der Vorsteuerkammer 80 und dem Rücklaufanschluß 20 geschaffen.

Diese Verbindung führt von der Vorsteuerkammer 80 über die axialen Kanäle 104, 105, die radialen Kanäle 106, 107, das Sackloch 94, den radialen Kanal 102, die Ringnut 98, die radiale Öffnung 60, den ringförmigen Zwischenraum 56 und die Anflächung 57 zum Rücklaufanschluß 20. Diese Verbindung kann als Vorsteuerentlastungskanal bezeichnet werden. Sie senkt den Druck in der Vorsteuerkammer 80 und bewirkt, daß sich der Hauptsteuerschieber 70 nach oben (Figur 1) bewegt, um die Verbindung zwischen Arbeitsanschluß 24 und Speiseanschluß 18 zu öffnen und die Verbindung zwischen Arbeitsanschluß 24 und Rücklaufanschluß 20 zu schließen.

Die Verbindung zwischen Arbeitsanschluß 24 und Rückkopplungskammer 162 (Lastrückkopplungskanal) bleibt während des ersten Teils der Bewegung des Vorsteuerventilschiebers 120 offen. Dieses Druckrückkopplungsverhalten gleicht Schwankungen der Ölviskosität und des Eingangsdruckes aus. Auch das untere Ende des Vorsteuerventilschiebers 120 steht mit dem Rücklaufdruck in Verbindung, und zwar über den radialen Kanal 100, die Ringnut 96, die radiale Öffnung 58, den zylindrischen Zwischenraum 56 und die Anflächung 57. Diese Verbindung verleiht dem Ventil eine Ausgangslage, von der aus Nachstellungen erfolgen.

Wird jedoch der gesamte Lastdruck gefordert, bewegt sich der Vorsteuerschieber 120 weiter nach oben (Figur 1) bis sich der Abschnitt 126 an den Öffnungen 112, 113 vorbeischiebt und diese verschließt. Dadurch wird die Verbindung zwischen Arbeitsanschluß 24 und Rückkopplungskammer 162 (Lastrückkopplungskanal) unterbrochen. Dies reduziert den Druck in der Kammer 162, weil die Kammer 162 mit dem Rücklaufanschluß 20 in Verbindung steht, und zwar über die axialen Bohrungen 142, 136, die Blende 137, den radialen Durchgangskanal 132, den radialen Kanal 108, die Ringnut 110, die radiale Öffnung 62, den ringförmigen Zwischenraum 56 und die Anflächung 57. Diese Verbindung kann als Entlastungsrückkopplugskanal bezeichnet werden.

Die Reduzierung des Rücklaufdruckes in der Kammer 162 erlaubt es der Magnetspule 34 den Magnetanker 140 und den Vorsteuerventilschieber 120 vollständig empor (Figur 1) zu ziehen, so daß auch der Hauptsteuerschieber 70 vollständig gehoben wird und die Verbindung zwischen Speiseanschluß 18 und Arbeitsanschluß 24 völlig geöffnet wird.

**Patentansprüche**

1.  Hydraulisch gesteuertes Ventil (10) mit einem in einem Gehäuse (12) bewegbaren Hauptsteuerschieber (70) zur Steuerung der Flüssigkeitsverbindung zwischen einem Speiseanschluß (18), welcher die Hauptventilbohrung (14) mit einer Druckquelle verbindet, einem Rücklaufanschluß (20), welcher die Hauptventilbohrung (14) mit einem Sammelbehälter verbindet, und einem Arbeitsanschluß (24), welcher die Hauptventilbohrung (14) mit einer hydraulischen Last (22) verbindet, ferner mit einem beweglichen Vorsteuerventilteil (120), durch welches ein Vorsteuerdruck zur Beeinflussung der Stellung des Hauptsteuerventilschiebers (70) einstellbar ist, und mit Lastrückkopplungsmitteln (52, 112, 113, 134, 136, 142; 162), die in Abhängigkeit vom Flüssigkeitsdruck im Arbeitsanschluß (24) eine Beeinflussung der Bewegung des Vorsteuerventilteils (120) in der Weise ermöglichen, daß Schwankungen der Flüssigkeitsviskosität und des Speisedruckes ausgeglichen werden, dadurch gekennzeichnet, daß Steuerungsmittel (112, 113; 126) vorgesehen sind, die die Lastrückkopplungsmittel (52, 112, 113, 134, 136, 142; 162) dann außer Funktion setzen, wenn das Vorsteuerventilteil (120) sich in einer Lage befindet, in der es den Hauptsteuerschieber (70) veranlaßt, den Druck am Arbeitsanschluß (24) zu maximieren.

2. Ventil nach Anspruch 1, dadurch gekennzeichnet, daß die Steuerungsmittel (112, 113; 126) bei einer festlegbaren Vorschubstellung des Vorsteuerventilteils (120) wirksam werden.

3. Ventil nach Anspruch 1 oder 2, dadurch gekennzeichnet, daß ein Lastrückkopplungsmittel als Lastrückkopplungskanal (52, 112, 113, 134, 136, 142) ausgebildet ist, der das druckabhängige Vorsteuerventilteil (120) mit dem Flüssigkeitsdruck des Arbeitsanschlusses (24) beaufschlagt (bei 162) und daß als Steuerungsmittel Ventilmittel (112, 113; 126) zum Steuern des Flüssigkeitsstromes durch den Lastrückkopplungskanal vorgesehen sind.

4. Ventil nach Anspruch 3, dadurch gekennzeichnet, daß ein Teil (134, 136) des Lastrückkopplungskanals durch einen Teil des Vorsteuerventilteils (120) hindurch führt.

5. Ventil nach Anspruch 3 oder 4, dadurch gekennzeichnet, daß das Gehäuse (12) und der Hauptsteuerschieber (70) eine Vorsteuerkammer (80) bilden, derart, daß der Hauptsteuerschieber (70) in Abhängigkeit des Flüssigkeitsdruckes in der Vorsteuerkammer (80) bewegt wird und daß eine Gehäusekappe (30) und das Vorsteuerventilteil (120) eine Rückkopplungskammer (162) bilden, welche Rückkopplungskammer (162) über den Lastrückkopplungskanal (52, 112, 113, 134, 136, 142) mit dem Flüssigkeitsdruck des Arbeitsanschlusses (24) in Verbindung steht.

6. Ventil nach Anspruch 5, dadurch gekennzeichnet, daß ein Entlastungsrückkopplungskanal (132, 136, 137, 142) den Rücklaufanschluß (20) mit der Rückkopplungskammer (162) verbindet.

7. Ventil nach Anspruch 6, dadurch gekennzeichnet, daß wenigstens ein Teil (132, 136, 137) des Entlastungsrückkopplungskanals durch einen Teil des Vorsteuerventilteils (120) hindurchführt.

8. Ventil nach Anspruch 6 oder 7, dadurch gekennzeichnet, daß ein eine Gehäusebohrung (94) zur Aufnahme eines Vorsteuerventilschiebers (120) enthaltendes Vorsteuerventilgehäuse (90) vorgesehen ist, mit wenigstens einer ersten Öffnung (112, 113), die mit der Bohrung (94) in Verbindung steht und mit dieser einen Abschnitt des Lastrückkopplungskanals bildet, ferner mit wenigstens einer zweiten Öffnung (106, 107), die mit der Bohrung (94) in Verbindung steht und mit dieser einen Abschnitt des Entlastungsrückkopplungskanals bildet, daß der Vorsteuerventilschieber (120) verschiebbar in der Gehäusebohrung (94) angeordnet ist und eine axiale Bohrung (136) aufweist, welche mit einem Ende der Rückkopplungslungskammer (162) in Verbindung steht, daß der Vorsteuerventilschieber (120) wenigstens einen ersten radialen Durchgangskanal (134), der die axiale Bohrung (136) kreuzt und einen Abschnitt des Lastrückkopplungskanals bildet und wenigstens einen zweiten radialen Durchgangskanal (132), der die axiale Bohrung (136) kreuzt und einen Abschnitt des Entlastungsrückkopplungskanals bildet, aufweist und daß sich zwischen dem ersten und zweiten Durchgangskanal (134, 132) ein hervorstehender Steg (126) befindet, welcher mit der Wandung der Gehäusebohrung (94) zusammenwirkt, um die Verbindung zwischen der ersten Öffnung (113) des Vorsteuerventilgehäuses (90) und dem ersten Durchgangskanal (134) des Vorsteuerventilschiebers (120) zu öffnen und zu schliessen.

9. Ventil nach Anspruch 8, dadurch gekennzeichnet, daß die axiale Bohrung (136) zwischen dem zweiten radialen Durchgangskanal (132) und der Rückkopplungskammer (162) einen Abschnitt mit vermindertem Querschnitt (137) aufweist.

10. Ventil nach einem der Ansprüche 5 bis 9, dadurch gekennzeichnet, daß ein Vorsteuerversorgungskanal (78), der den Speiseanschluß (16; 18) mit der Vorsteuerkammer (80) verbindet, und ein Vorsteuerentlastunqskanal (104, 105, 106, 107; 102, 98), der den Rücklaufanschluß (20) mit der Vorsteuerkammer (80) verbindet, vorgesehen ist, wobei die Durchflußmenge des Vorsteuerentlastungskanals durch die Stellung des Vorsteuerventilschiebers (120) beeinflußbar ist, derart, daß mit steigendem Druck in der Rückkopplungskammer (162) der Vorsteuerentlastungskanal geschlossen wird.

**11.** Ventil nach Anspruch 10, dadurch gekennzeichnet, daß die Rückkopplungsventilmittel derart ausgelegt sind, daß sie den Lastrückkopplungskanal bei wenigstens einer vorbestimmbaren Vorschubstellung des Vorsteuerventilteils (120) verschließen, wenn letzteres in Richtung auf das Öffnen der Verbindung zwischen Vorsteuerkammer (80) und Vorsteuerentlastungskanal verschoben wird.

**12.** Ventil nach Anspruch 10 oder 11, dadurch gekennzeichnet, daß wenigstens ein Teil (78) des Vorsteuerversorgungskanals durch einen Teil des Vorsteuerventilteils (120) hindurchführt.

**13.** Ventil nach einem der Ansprüche 10 bis 12, dadurch gekennzeichnet, daß wenigstens ein Teil (104, 105, 106, 107) des Vorsteuerentlastungskanals durch einen Teil des Vorsteuerventilgehäuses (90) hindurchführt.

**14.** Ventil nach Anspruch 1 oder 2, gekennzeichnet durch eine digital gesteuerte Vorsteuerstufe, die das Vorsteuerventilteil (120) mit einer Auf-Zu-Charakteristik beaufschlagt, und einen Drucksensor im Bereich des Arbeitsanschlusses (24) zur elektrischen Messung des Lastdruckes, wobei das Lastdruckmeßsignal zur Steuerung der Vorsteuerstufe herangezogen wird.

**Claims**

**1.** Hydraulically controlled valve (10) with a main control spool (70) movable in a housing (12) for controlling the fluid connection between a supply connection (18), which connects the main valve bore (14) to a source of pressure, a return connection (20) which connects the main valve bore (14) to a reservoir, an a working connection (24) which connects the main valve bore (14) to a hydraulic load (22), further with a movable pilot valve part (120), through which a pilot pressure for affecting the setting of the main control valve spool (70) can be adjusted, and with load feedback means (52, 112, 113, 134, 136, 142; 162) which make it possible to affect the movement of the pilot valve part (120) in dependence on the fluid pressure in the working connection (24), in such a manner that fluctuations in the fluid viscosity and the supply pressure are compensated, characterized in that control means (112, 113; 126) are provided which disable the load feedback means (52, 112, 113, 134, 136, 142; 162) when the pilot valve part (120) is located in a position in which it causes the main control spool (70) to maximise the pressure at the working connection (24).

**2.** Valve according to claim 1, characterized in that the control means (112, 113; 126) are effective in a determinate position of advance of the pilot valve part (120).

**3.** Valve according to claim 1 or 2, characterized in that a load feedback means is formed as a load feedback channel (52, 112, 113, 134, 136, 142), which acts on the pressure-dependent pilot valve part (120) with the fluid pressure of the working connection (24) (at 162), and in that valve means (112, 113; 126) are provided as control means for controlling the fluid flow through the load feedback channel.

**4.** Valve according to claim 3, characterized in that a part (134, 136) of the load feedback channel passes through a part of the pilot valve part (120).

**5.** Valve according to claim 3 or 4, characterized in that the housing (12) and the main control spool (70) form a pilot chamber (80), such that the main control spool (70) is moved in dependence on the fluid pressure in the pilot chamber (80), and in that a housing cap (30) and the pilot valve part (120) form a feedback chamber (162), which feedback chamber (162) is in communication with the fluid pressure of the working connection (24) through the load feedback channel (52. 112, 113, 134, 136, 142).

**6.** Valve according to claim 5. characterized in that a relief feedback channel (132, 136, 137, 142) connects the return connection (20) to the feedback chamber (162).

**7.** Valve according to claim 6, characterized in that at least a part (132, 136, 137) of the relief feedback channel passes through a part of the pilot valve part (120).

**8.** Valve according to claim 6 or 7, characterized in that there is provided a pilot valve housing (90) having a housing bore (94) to receive a pilot valve spool (120), with at least one first opening (112, 113) which is in communication with the bore (94) and forms with this a section of the load feedback channel, further with at least one second opening (106, 107) which is in communication with the bore (94) and forms with this a section of the relief feedback channel, in that the pilot valve spool (120) is arranged slidably in the housing bore (94) and has an axial bore (136), which is in communication with one end of the feedback chamber (162), in that the pilot valve spool (120) has at least one first radial through channel (134) which intersects the axial bore (136) and forms a section of the load feedback channel and at least one second radial through channel (132) which intersects the axial bore (136) and forms a section of the relief feedback channel, and in that a projecting land (126) is located between the first and second through channels (134, 132), which land cooperates with the wall of the housing bore (94), in order to open and close the connection between the first opening (113) of the pilot valve housing (90) and the first through channel (134) of the pilot valve spool (120).

9. Valve according to claim 8, characterized in that the axial bore (136) has a section of reduced cross-section (137) between the second radial through channel (132) and the feedback chamber (162).

10. Valve according to one of claims 5 to 9, characterized in that a pilot feed channel (78) is provided which connects the supply connection (16; 18) to the pilot chamber (80), and a pilot relief channel (104, 105, 106, 107; 102, 98) is provided which connects the return connection (20) to the pilot chamber (80), wherein the flow amount of the pilot relief channel can be affected by the position of the pilot valve spool (120) in such a manner that the pilot relief channel is closed with rising pressure in the feedback chamber (162).

11. Valve according to claim 10, characterized in that the feedback valve means are so designed that they close the load feedback channel at at least a pre-settable position of advance of the pilot valve part (120), when the latter is displaced in the direction of opening the connection between pilot chamber (80) and pilot relief channel.

12. Valve according to claim 10 or 11, characterized in that at least a part (78) of the pilot feed channel passes through a part of the pilot valve part (120).

13. Valve according to one of claims 10 to 12, characterized in that at least a part (104, 105, 106, 107) of the pilot relief channel passes through a part of the pilot valve housing (90).

14. Valve according to claim 1 or 2, characterized by a digitally controlled pilot stage, which acts on the pilot valve part (120) with an on-off characteristic, and a pressure sensor in the region of the working connection (24) for measuring the load pressure electrically, wherein the load pressure measurement signal is applied to control the pilot stage.

**Revendications**

1. Soupape à commande hydraulique (10) comportant un tiroir principal de commande (70) déplaçable dans un carter (12) et servant à commander la communication fluidique entre un raccord d'alimentation (18), qui raccorde le perçage principal (14) de la soupape à une source de pression, un raccord de reflux (20), qui raccorde le perçage principal de soupape (14) à un récipient de collecte, et un raccord de travail (24), qui relie le perçage principal de soupape (14) à une charge hydraulique (22), et comportant en outre un élément de soupape pilote mobile (120), au moyen duquel une pression pilote peut être réglée pour influer sur la position du tiroir principal de commande (70) de la soupape, et comportant des moyens de rétroaction de charge (52,112,113,134,136,142;162), qui, en fonction de la pression du liquide dans le raccord de travail (24), permettent d'influer sur le déplacement de l'élément de soupape pilote (120) de manière à compenser des variations de la viscosité du liquide et de la pression d'alimentation, caractérisée par le fait qu'il est prévu des moyens de commande (112,113;126), qui mettent hors service les moyens de rétroaction de charge (52,112,113,134,136,142; 162) lorsque l'élément de soupape pilote (120) est situé dans une position, dans laquelle il amène le tiroir de soupape principal (70) à rendre maximale la pression dans le raccord de travail (24).

2. Soupape selon la revendication 1, caractérisée en ce que les moyens de commande (112,113;126) deviennent actifs lorsque l'élément de soupape pilote (120) est dans une position d'avance pouvant être déterminée.

3. Soupape selon la revendication 1 ou 2, caractérisée en ce qu'un moyen de rétroaction de charge est agencé sous la forme d'un canal de rétroaction de charge (52,112,113,132,136,142), qui charge (en 162) l'élément de soupape pilote (120), qui dépend de la pression, avec la pression du liquide dans le raccord de travail (24) et qu'il est prévu, comme moyens de commande, des moyens de soupape (112,113,126) servant à commander l'écoulement du liquide dans le canal de rétroaction de charge.

4. Soupape selon la revendication 3, caractérisée en ce qu'une partie (134,136) du canal de rétroaction de charge traverse une partie de l'élément de soupape pilote (120).

5. Soupape selon la revendication 3 ou 5, caractérisée en ce que le carter (12) et le tiroir de commande principal (70) forment une chambre pilote (80) de sorte que le tiroir de commande principal (70) est déplacé en fonction de la pression du liquide dans la chambre pilote (80) et qu'un capot (30) du carter et l'élément de soupape pilote (120) forment une chambre de rétroaction (162), à laquelle est appliquée, par l'intermédiaire du canal de rétroaction de charge (52,112,113,134,136,142), la pression du liquide dans le raccord de travail (24).

6. Soupape selon la revendication 5, caractérisée en ce qu'un canal (132,136,137,142) de rétroaction de décharge raccorde le raccord de reflux (20) à la chambre de rétroaction (162).

7. Soupape selon la revendication 6, caractérisée en ce qu'au moins une partie (132,136,137) du canal de rétroaction de décharge traverse une partie de l'élément de soupape pilote (120).

8. Soupape selon la revendication 6 ou 7, caractérisée en ce qu'il est prévu un carter de soupape pilote (90), qui contient un perçage de carter (94) servant à loger un tiroir de soupape pilote (120) et qui comporte au moins une première ouverture (112,113) qui est raccordée au perçage (94) et forme, avec ce dernier, une section du canal de rétroaction de charge, et qui possède en outre au moins une seconde ouverture (106,107), qui est raccordée au perçage (94) et forme avec ce dernier une section du canal de rétroaction de décharge, que le tiroir de soupape pilote (120) est disposé de manière à pouvoir être déplacé dans le perçage de carter (94) et possède un perçage axial (136), qui est raccordé à une extrémité de la chambre de rétroaction (162), que le tiroir de soupape pilote (120) possède au moins un premier canal radial de traversée (134), qui croise le perçage axial (136) et forme une section du canal de rétroaction de charge, et au moins un second canal radial de traversée (132), qui croise le perçage axial (136) et forme une section du canal de rétroaction de décharge, et qu'entre les premier et second canaux de traversée (134,132) est disposée une barrette saillante (126) qui coopère avec la paroi du perçage de carter (94) pour établir et interrompre la liaison entre la première ouverture (113) du carter de soupape pilote (90) et le premier canal de traversée (134).

9. Soupape selon la revendication 8, caractérisée en ce que le perçage axial (136) possède, entre le second canal radial de traversée (132) et la chambre de rétroaction (162), une partie possédant une section transversale réduite (137).

10. Soupape selon l'une des revendications 5 à 9, caractérisée en ce qu'il est prévu un canal d'alimentation pilote (78), qui relie le raccord d'alimentation (16;18) à la chambre pilote (81), et un canal de décharge pilote (104,105,106,107; 102,98), qui raccorde le raccord de reflux (20) à la chambre pilote (80), le débit dans le canal de décharge pilote pouvant être influencé par la position du tiroir de soupape pilote (120) de manière que, lorsque la pression dans la chambre de rétroaction (162) augmente, le canal de décharge pilote est fermé.

11. Soupape selon la revendication 10, caractérisée en ce que les moyens de soupape de rétroaction sont agencés de manière à fermer le canal de rétroaction de charge dans au moins une position d'avance, pouvant être prédéterminée, de l'élément de soupape pilote (120), lorsque ce dernier est déplacé dans le sens de l'interruption de la liaison entre la chambre pilote (80) et le canal de décharge pilote.

12. Soupape selon la revendication 10 ou 11, caractérisé en ce qu au moins une partie (78) du canal d'alimentation pilote traverse une partie de l'élément de soupape pilote (120).

13. Soupape selon l'une des revendications 10 à 12, caractérisé en ce qu au moins une partie (104,105,106,107) du canal de décharge pilote traverse une partie du carter de soupape pilote (90).

14. Soupape selon la revendication 1 ou 2, caractérisée par un étage pilote à commande numérique, qui charge l'élément de soupape pilote (120) avec une caractéristique d'ouverture-d'arrêt, et un capteur de pression placé au voisinage du raccord de travail (24) pour réaliser la mesure électrique de la pression de charge, le signal de mesure de la pression de charge étant utilisé pour commander l'étage pilote.

Fig. 1

Fig. 2

Fig. 3

Fig. 4

Fig. 6

Fig. 5

Fig. 8

Fig. 7